# EUROPEAN PATENT APPLICATION

(11) **EP 4 775 329 A1**
(43) Date of publication of application: **15.07.2026**
(21) Application number: 24862800.0
(22) Date of filing: 03.09.2024
(51) Int. Cl.: B22F 1/00, B22F 10/28, B22F 10/38, B22F 10/64, B33Y 70/00, B33Y 80/00, C22C 19/05, C22F 1/10, B22F 1/05, C22F 1/00

(54) **NI-BASED ALLOY POWDER FOR ADDITIVE MANUFACTURING AND METHOD FOR MANUFACTURING NI-BASED ALLOY MOLDING**

(30) Priority: 04.09.2023 JP 2023143293; 20.05.2024 JP 2024081434
(71) Applicant: Proterial, Ltd., Tokyo 135-0061 (JP)
(72) Inventor: AOTA Kinya, Tokyo 135-0061 (JP)
(74) Representative: Appelt, Christian W.
(86) International application number: PCT/JP2024/031639
(87) International publication number: WO 2025/053148

(57) **Abstract**

A molding in which cracking does not occur can be obtained by this method for powder melt additive manufacturing using a Ni-based alloy powder for additive manufacturing comprising, in terms of mass%, 6-12% Cr, 1-4% Mo, 4-8% Al, 6-11% Co, 7-12% W, 1-5% Ta, 1.5-7% Fe, 0.1-0.25% C, no more than 0.5% Ti, no more than 0.2% Zr, no more than 0.1% B, no more than 0.5% Nb, and no more than 0.5% Hf, the remainder being Ni and unavoidable impurities.

## Description

### TECHNICAL FIELD

The present invention relates to a Ni-based alloy powder for additive manufacturing and a method for manufacturing a Ni-based alloy built part.

### BACKGROUND ART

Nickel (Ni)-based alloys excellent in heat resistance and high temperature oxidation resistance are required for additively manufactured components used at high temperatures, such as gas turbines for aircraft and turbines for automobile turbochargers.

As such a Ni-based alloy, for example, PATENT LITERATURE 1 discloses a composition of a Ni-based alloy containing: Ni as a main constituent; and the following portions in mass%: Fe (iron): 2 to 8, Al (aluminum): 6.1 to 6.8, Cr (chromium): 12.5 to 15, W (tungsten): 1.5 to 4.5, Ta (tantalum): 2.5 to 5.5, Hf (hafnium): 1.2 to 2, C (carbon): 0.03 to 0.13, B (boron): 0.005 to 0.02, Zr (zirconium): 0.005 to 0.02, and Si (silicon): 0.005 to 0.02. According to the invention described in PATENT LITERATURE 1, a nickel-based alloy excellent in thermal mechanical strength, oxidation resistance, and processability can be provided.

### CITATION LIST

### PATENT LITERATURE

PATENT LITERATURE 1: JP-A-2021-504564

### SUMMARY OF INVENTION

### TECHNICAL PROBLEM

The alloy disclosed in PATENT LITERATURE 1 described above provides an additively manufactured product excellent in strength at a high temperature and oxidation resistance. However, a built part obtained by building a Ni-based alloy composition by an additive manufacturing method as disclosed in PATENT LITERATURE 1 has a problem in that hot cracking is likely to occur, and this is not taken into consideration. When cracking occurs, high-temperature strength is deteriorated, creep characteristics are deteriorated, and oxidation resistance is deteriorated.

Therefore, an object of the present invention is to provide a method for manufacturing a Ni-based alloy built part capable of suppressing the occurrence of cracking during melting and solidification, and a Ni-based alloy powder for additive manufacturing used in the manufacturing of a Ni-based alloy built part.

### SOLUTION TO PROBLEM

A first invention is a Ni-based alloy powder for additive manufacturing, comprising at least, as additive elements, in mass%: Cr: 6% or more and 12% or less, Mo: 1% or more and 4% or less, Al: 4% or more and 8% or less, Co (cobalt): 6% or more and 11% or less, W: 7% or more and 12% or less, Ta: 1% or more and 5% or less, Fe: 1.5% or more and 7% or less, C: 0.1% or more and 0.25% or less; and the remainder being Ni and unavoidable impurities.

The Ni-based alloy powder for additive manufacturing preferably contains, as the additive element, B: more than 0% and 0.1% or less.

The Ni-based alloy powder for additive manufacturing preferably contains, as the additive element, at least one of Nb (niobium): more than 0% and 0.5% or less and Hf: more than 0% and 0.5% or less.

The Ni-based alloy powder for additive manufacturing preferably contains, as the additive elements, Ti (titanium): more than 0% and 0.5% or less and Zr: more than 0% and 0.2% or less.

The B is preferably 0.005% or more and 0.05% or less.

The Zr is preferably 0.02% or more and 0.15% or less.

A second invention is a method for manufacturing a Ni-based alloy built part, the method comprising: performing a powder-fusion additive manufacturing method to obtain a Ni-based alloy built part, the powder-fusion additive manufacturing method including: supplying a Ni-based alloy powder for additive manufacturing, containing at least, as additive elements, in mass%: Cr: 6% or more and 12% or less, Mo: 1% or more and 4% or less, Al: 4% or more and 8% or less, Co: 6% or more and 11% or less, W: 7% or more and 12% or less, Ta: 1% or more and 5% or less, Fe: 1.5% or more and 7% or less, C: 0.1% or more and 0.25% or less; and the remainder being Ni and unavoidable impurities; selectively irradiating the Ni-based alloy powder with laser light to melt and solidify the Ni-based alloy powder; and repeating a step of supplying, melting, and solidifying the Ni-based alloy powder.

The Ni-based alloy powder for additive manufacturing preferably contains, as the additive element, B: more than 0% and 0.1% or less.

The Ni-based alloy powder for additive manufacturing preferably contains, as the additive element, at least one of Nb (niobium): more than 0% and 0.5% or less and Hf: more than 0% and 0.5% or less.

The Ni-based alloy powder for additive manufacturing preferably contains, as the additive elements, Ti (titanium): more than 0% and 0.5% or less and Zr: more than 0% and 0.2% or less.

A boundary width of a primary dendrite structure in a cross-sectional structure of the Ni-based alloy built part is preferably 0.4 µm or less.

It is preferable to include a heat treatment step of subjecting the Ni-based alloy built part to a heat treatment after the additive manufacturing step.

The heat treatment step preferably includes a solution heat treatment and an aging heat treatment.

An area ratio occupied by a carbide in a cross-sectional structure of the Ni-based alloy built part is preferably 5% or more and 12% or less.

### ADVANTAGEOUS EFFECTS OF INVENTION

According to the present invention, it is possible to provide a method for manufacturing a Ni-based alloy built part capable of suppressing the occurrence of cracking during melting and solidification, and a Ni-based alloy powder for additive manufacturing used in the manufacturing of a Ni-based alloy built part.

### BRIEF DESCRIPTION OF DRAWINGS

FIG. 1 is a cross-sectional photograph of a built part showing an example of cracking.
FIG. 2 is a schematic view of a powder bed fusion method.
FIG. 3 is a cross-sectional photograph of a primary dendrite of a built part in which cracking did not occur.
FIG. 4 is a cross-sectional photograph of a secondary dendrite generated near cracking.
FIG. 5 is a STEM observation image of Example 2 after additive manufacturing.
FIG. 6 is a cross-sectional photograph of a built part of Example 2 after a heat treatment step.
FIG. 7 is a photograph of a gamma-prime precipitate in Example 1 after a heat treatment step.
FIG. 8 is a photograph of a gamma-prime precipitate in Example 3 after a heat treatment step.

### DESCRIPTION OF EMBODIMENTS

Hereinafter, embodiments of the present invention will be described.

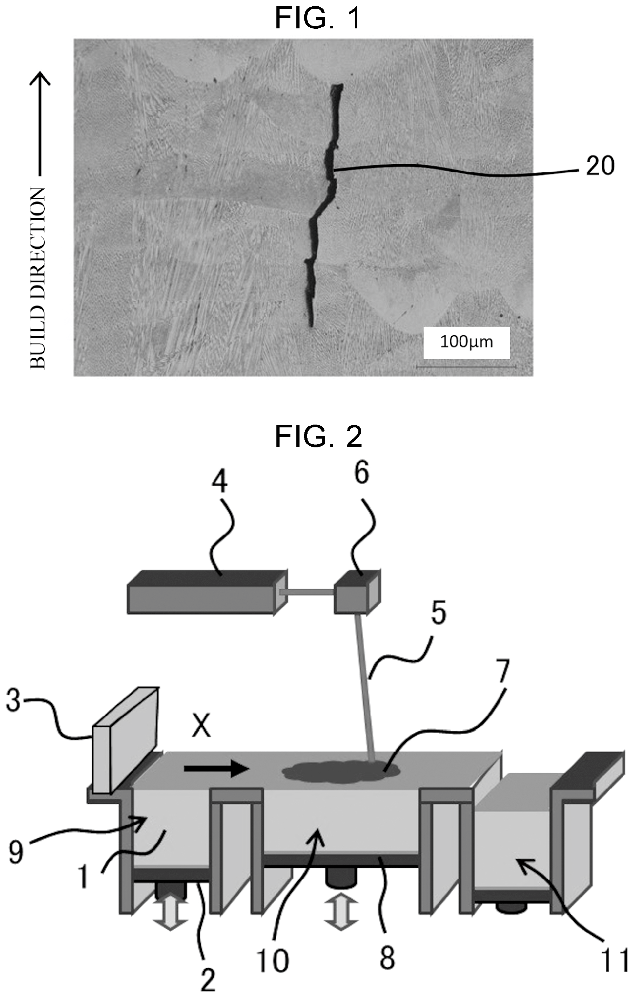

A powder-fusion additive manufacturing method (hereinafter, simply referred to as an additive manufacturing method) is an additive manufacturing method in which heat source energy such as a laser or an electron beam is supplied only to a minute very limited region of a metal powder, and the heat source energy is moved at a high speed to melt and solidify the metal powder, so that a fine metal powder is instantaneously melted and then solidified by heat radiation, and it is known that the solidification speed of the melted metal powder is very high. Therefore, some Ni-based alloy compositions have a problem in that cracking occurs during solidification in an additive manufacturing method when used for building. FIG. 1 shows a cross-sectional photograph of a built part showing an example of cracking. It can be seen that elongated cracking 20 is generated in a built part direction. As this mechanism, since the phase transformation in the solidification process is a liquid phase at a high temperature, when the temperature is lowered, the liquid phase and the solid phase coexist, and when the temperature is further lowered, only the solid phase is formed, but in the additive manufacturing method, the cooling rate is very high, so that segregation with a low melting point occurs at a crystal grain boundary, and cracking occurs at the crystal grain boundary due to shrinkage during cooling. Therefore, as shown in FIG. 1, cracking proceeds in a build direction in which cooling proceeds. As described above, a new composition of a Ni-based alloy in which cracking does not occur even when building is performed by an additive manufacturing method, and a method for manufacturing a built part by an additive manufacturing method using a powder material composed of the composition in an embodiment of the present invention are disclosed below.

Hereinafter, an embodiment of the present invention will be described. First, a Ni-based alloy powder for additive manufacturing (hereinafter, simply referred to as a Ni-based alloy powder) will be described, and next, a Ni-based alloy built part manufactured by an additive manufacturing method using this Ni-based alloy powder and a method for manufacturing the same will be described. However, the present invention is not limited to the embodiments described herein, and can be appropriately combined and improved without departing from the technical idea of the invention.

### [Ni-based alloy powder]

A Ni-based alloy powder as a first embodiment of the present invention contains, in mass%, Cr: 6% or more and 12% or less, Mo: 1% or more and 4% or less, Al: 4% or more and 8% or less, Co: 6% or more and 11% or less, W: 7% or more and 12% or less, Ta: 1% or more and 5% or less, Fe: 1.5% or more and 7% or less, C: 0.1% or more and 0.25% or less, and the remainder being Ni and unavoidable impurities. Hereinafter, Cr, Mo, Al, Co, W, Ta, Fe, and C are referred to as essential additive elements. It is preferable to add one or more of B: more than 0% and 0.1% or less, Nb: more than 0% and 0.5% or less, Hf: more than 0% and 0.5% or less, Ti: more than 0% and 0.5% or less, and Zr: more than 0% and 0.2% or less. Hereinafter, B, Nb, Hf, Ti, and Zr are referred to as optional additive elements. This Ni-based alloy powder is used for additive manufacturing described later.

### <Alloy composition>

Hereinafter, the reason for limitation of each composition component in the Ni-based alloy powder of the present embodiment will be described. First, the essential additive elements will be described, and then the optional additive elements will be described. In the following description, % represents mass%. In the present specification, a numerical range represented by "to" means a range including numerical values described before and after "to" as a lower limit value and an upper limit value. The upper limit value and the lower limit value can be arbitrarily combined.

### (Essential additive elements)

### (Cr: 6% or more and 12% or less)

Cr is effective in improving oxidation resistance, and is an important main component for obtaining favorable oxidation resistance at a high temperature. In order to improve oxidation resistance by an oxide film of Cr, 6% or more is required. On the other hand, when the addition amount is more than 12%, it is necessary to reduce the addition amount of other alloy elements, so that high-temperature strength and high-temperature creep characteristics are deteriorated. The addition amount is preferably 7 to 11%. The addition amount is more preferably 8 to 9%.

### (Mo: 1% or more and 4% or less)

Mo is required to be 1% or more in order to improve high-temperature strength and high-temperature creep characteristics by solid solution strengthening (interaction between solid solution in crystal and dislocation prevents dislocation movement, and mainly enhances tensile strength or the like) and to improve oxidation resistance. On the other hand, when the alloy element was excessively added, it was required to reduce the addition amount of other alloy elements, so that the addition amount was set to 4% or less. The addition amount is preferably 1.5 to 3.5% or less. The addition amount is more preferably 2 to 3%.

### (Al: 4% or more and 8% or less)

Al is bonded to Ni after an aging heat treatment described later to form a gamma-prime precipitate. The formation of the gamma-prime precipitate improves high-temperature strength and high-temperature creep characteristics. Therefore, 4% or more is required. When Al was excessively added, a brittle compound of NiAl₂ was produced, so that the addition amount was set to 8% or less. The addition amount is preferably 5 to 7%. The addition amount is more preferably 5.5 to 6.5%.

### (Co: 6% or more and 11% or less)

Co is required to be 6% or more in order to improve high-temperature strength and the strength of high-temperature creep characteristics by solid solution strengthening. When Co was excessively added, other additive elements could not be increased, so that the addition amount was set to 11% or less. The addition amount is preferably 7 to 10%. The addition amount is more preferably 8 to 9%.

### (W: 7% or more and 12% or less)

W is required to be 7% or more in order to improve high-temperature strength and high-temperature creep characteristics by solid solution strengthening and carbide generation. When W was excessively added, other additive elements could not be increased, and a brittle phase was formed, so that the addition amount was set to 12% or less. The addition amount is preferably 8 to 11%. The addition amount is more preferably 7 to 10%.

### (Ta: 1% or more and 5% or less)

Ta is bonded to Ni after an aging heat treatment described later to form a gamma-prime precipitate. The formation of the gamma-prime precipitate improves high-temperature strength and high-temperature creep characteristics. Therefore, 1% or more is required. When Ta was excessively added, other additive elements could not be increased, so that the addition amount was set to 5% or less. The addition amount is preferably 1.2 to 4%. The addition amount is more preferably 1.3 to 3%.

### (Fe: 1.5% or more and 7% or less)

The addition of Fe is effective for preventing cracking. Since Fe lowers high-temperature strength and high-temperature creep characteristics, Fe is not generally added to a Ni-based alloy excellent in high-temperature characteristics, but it has been revealed that Fe is effective for preventing cracking in the present invention. It was also revealed that a decrease in high-temperature characteristics is small when the amount is small. Therefore, 1.5% or more is required to prevent cracking. However, when Fe is excessively added, high-temperature strength and high-temperature creep characteristics are greatly deteriorated, so that it is necessary to set the addition amount to 7% or less. The addition amount is preferably 2 to 6%. The addition amount is more preferably 2.5 to 5.0%.

### (C: 0.1% or more and 0.25% or less)

In the Ni-based alloy, it has been clarified that the larger the addition amount of C, the more effective the prevention of cracking, and that high-temperature creep characteristics can be improved by forming a carbide at a crystal grain boundary, and the formation of a carbide in the crystal grains is also effective in improving the high-temperature strength. Both the carbides generated at the crystal grain boundary and in the crystal grains are composite carbides of W, Mo, and Ta. The addition amount of C was set to 0.1% or more since it contributes to prevention of cracking and improvement of high-temperature strength and high-temperature creep characteristics. However, when C was excessively added, the carbide was excessively increased to cause a decrease in toughness and a decrease in high-temperature fatigue strength, so that the addition amount was set to 0.25% or less. The addition amount is preferably 0.12 to 0.22%. The addition amount is more preferably 0.15 to 0.2%.

### (Optional additive elements)

### (B: more than 0% and 0.1% or less)

B is an element that forms a compound with Cr and Mo at a grain boundary to suppress grain boundary sliding and improve high-temperature creep characteristics. However, when B is excessively added, high-temperature creep characteristics are deteriorated conversely, so that it is necessary to reduce the amount of B even when B is added. Therefore, B was an optional additive element, and when B was added, B was set to more than 0% and 0.1% or less. The addition amount is preferably 0.005 to 0.05%. By adding 0.005% or more, the compound of B is precipitated so as to be uniform and spread over the entire grain boundary to improve the high-temperature creep characteristics, and by setting the addition amount to 0.05% or less, even when concentration unevenness of B occurs, it is possible to prevent a decrease in high-temperature creep due to excessive addition. The addition amount is still more preferably 0.01 to 0.04%. Note that, since there is a low possibility that cracking is likely to occur even when B is added, B may be preferentially added among optional additive elements.

### (Nb: more than 0% and 0.5% or less)

Nb is an element that improves high-temperature strength and high-temperature creep characteristics by solid solution strengthening. However, since the addition of Nb easily causes cracking, it is necessary to reduce the amount of Nb even when Nb is added. Therefore, Nb was an optional additive element, and when Nb was added, Nb was set to more than 0% and 0.5% or less. The addition amount is preferably 0.05% or more and 0.2% or less.

### (Hf: more than 0% and 0.5% or less)

Hf is an element that improves high-temperature creep characteristics by grain boundary segregation when the molten metal powder is solidified. However, since the addition of Hf easily causes cracking, it is necessary to reduce the amount of Hf even when Hf is added. Therefore, Hf was an optional additive element, and when Hf was added, Hf was set to more than 0% and 0.5% or less. The addition amount is preferably 0.05% or more and 0.2% or less.

### (Zr: more than 0% and 0.2% or less)

Zr is an element that improves high-temperature creep characteristics by suppressing grain boundary sliding by generating a carbide at a grain boundary after an aging heat treatment described later. However, when Zr is excessively added, creep characteristics are deteriorated or cracking is likely to occur, so that it is necessary to reduce the amount of Zr even when Zr is added. Therefore, Zr was an optional additive element, and when Zr was added, Zr was set to more than 0% and 0.2% or less. The addition amount is preferably 0.02 to 0.15%. By adding 0.02% or more, a carbide of Zr is dispersed and precipitated so as to be uniform and spread over the entire grain boundary to improve high-temperature creep characteristics, and by setting the addition amount to 0.15% or less, cracking can be prevented even when a complicated build is formed. The addition amount is more preferably 0.05 to 0.13%.

### (Ti: more than 0% and 0.5% or less)

Ti is an element that forms a gamma-prime precipitate, which is a compound with Ni, after an aging heat treatment described later to improve high-temperature strength and high-temperature creep characteristics. However, since the addition of Ti easily causes cracking, it is necessary to reduce the amount of Ti even when Ti is added. Therefore, Ti was an optional additive element, and when Ti was added, Ti was set to more than 0% and 0.5% or less. The addition amount is preferably 0.05% or more and 0.2% or less. The addition amount is more preferably 0.05% or more and 0.1% or less.

Among the optional additive elements, B is an optional additive element, but the addition does not promote the occurrence of cracking, and a small amount of B can improve creep characteristics. Nb and Hf are optional additive elements, but when Nb and Hf are small in amount, there is no occurrence of cracking, and creep characteristics can be improved. Similarly, when the amounts of Zr and Ti are small, cracking does not occur, and creep characteristics can be improved by performing an aging heat treatment.

### (Unavoidable impurities)

The remainder contains unavoidable impurities. The unavoidable impurities mean a trace amount of impurities that are difficult to technically remove due to a trace element mixed in a raw material, a reaction with various members in contact in the manufacturing process, or the like. Among these impurities, impurities to be particularly limited are P, S, O, N, and the like. P is preferably 0.01% or less, S is preferably 0.01% or less, O is preferably 0.1% or less, and N is preferably 0.1% or less. Of course, it is more preferable that the content of these unavoidable impurities is as low as possible, and it is even better if it is 0%.

The remainder may further contain a trace element having a deoxidizing action such as Mn or Si. Each of these trace elements is preferably 1.0% or less. The amount thereof is still more preferably 0.5% or less. Note that the composition of the alloy powder can be analyzed using, for example, a high frequency inductively coupled plasma (ICP) emission spectrometry.

### <Particle size distribution of Ni-based alloy powder>

Regarding the particle size distribution of the Ni-based alloy powder of the present embodiment, when the particle size is too small, the fluidity is deteriorated, and conversely, when the particle size is too large, the accuracy of the built part is deteriorated, and the defect rate is also increased. Therefore, in the integrated distribution curve representing a relationship between the particle size determined by the laser diffraction method and the volume integration from each particle size, the particle size D50 (average particle size) corresponding to the integration frequency of 50% is preferably 10 µm or more and 100 µm or less. The particle size is more preferably 20 µm or more and 50 µm or less. As a method for manufacturing such a Ni-based alloy powder, a gas atomization method, a water atomization method, a disk atomization method, or the like can be used, but it is preferable to manufacture the Ni-based alloy powder by a gas atomization method in which a spherical powder is easily obtained and the production cost is low.

### [Method for manufacturing additively manufactured product]

A method for manufacturing a Ni-based alloy built part as a second embodiment of the present invention is characterized by including: performing a powder-fusion additive manufacturing method to obtain a Ni-based alloy built part, the powder-fusion additive manufacturing method including: supplying a Ni-based alloy powder for additive manufacturing, containing at least, as additive elements, in mass%: Cr: 6% or more and 12% or less, Mo: 1% or more and 4% or less, Al: 4% or more and 8% or less, Co: 6% or more and 11% or less, W: 7% or more and 12% or less, Ta: 1% or more and 5% or less, Fe: 1.5% or more and 7% or less, C: 0.1% or more and 0.25% or less; and the remainder being Ni and unavoidable impurities; selectively irradiating the Ni-based alloy powder with heat source energy to partially melt and solidify the Ni-based alloy powder; and repeating a step of supplying, melting, and solidifying the Ni-based alloy powder. The Ni-based alloy powder for additive manufacturing preferably contains one or more of B: more than 0% and 0.1% or less, Nb: more than 0% and 0.5% or less, Hf: more than 0% and 0.5% or less, Ti: more than 0% and 0.5% or less, and Zr: more than 0% and 0.2% or less. It is preferable to use laser light as the heat source energy.

An embodiment of a method for manufacturing a Ni-based alloy built part using the Ni-based alloy powder described above will be described. The method for manufacturing a Ni-based alloy built part according to the present embodiment is performed by an additive manufacturing method including supplying the above-described Ni-based alloy powder, selectively irradiating the supplied Ni-based alloy powder with laser light to partially melt and solidify the Ni-based alloy powder, and repeating a step of supplying, melting, and solidifying the Ni-based alloy powder.

In general, an additive manufacturing method using a metal powder as a raw material can be roughly classified into a powder bed fusion method (PBF) and a directed energy deposition method (DED), but any methods can be applied to the method for manufacturing a Ni-based alloy built part according to the present embodiment.

FIG. 2 is a schematic view of a powder bed fusion method as an example of the present embodiment. A powder 1 in a powder supply container 9 is pushed up by raising of a powder supply stage 2, and a recoater 3 is moved in an X direction so as to supply the powder onto a building box 10. The remaining powder 1 enters a powder recovery box 11. Next, the irradiation position of laser light 5 oscillated by a laser oscillator 4 is controlled (scanned) by a galvano scanner 6 to melt and solidify the powder 1 in a predetermined irradiation region 7. Next, the building stage 8 is lowered. This process is repeated to manufacture a three-dimensional built part.

The high-temperature strength can be further improved by subjecting the Ni-based alloy built part thus prepared immediately after the additive manufacturing to a heat treatment step including a solution heat treatment and an aging heat treatment.

The solution heat treatment is usually performed in order to make the composition uniform, and in the Ni-based alloy built part of the present embodiment, this treatment is performed in order to eliminate a boundary 23 of the primary dendrite structure solidified and segregated in addition to being performed in order to make the composition uniform. When the solution heat treatment temperature is too low, the diffusion rate is slow, so that the boundary 23 of the primary dendrite does not disappear, and when the solution heat treatment temperature is too high, the Ni-based alloy built part is melted, so that the heat treatment temperature is preferably 1160°C or higher and 1300°C or lower. When the solution heat treatment time is too short, the boundary 23 of the primary dendrite does not disappear, and when the solution heat treatment time is too long, the crystal grains are coarsened and the high-temperature strength is lowered, so that the heat treatment time is preferably 1 hour or more and 20 hours or less. Summarizing the solution heat treatment in the present embodiment, it can be said that the solution heat treatment is a step in which the Ni-based alloy built part after the additive manufacturing is held for a heat treatment time of 1 hour or more and 20 hours or less in a furnace set at a heat treatment temperature of 1160°C or higher and 1300°C or lower, and then taken out from the furnace and rapidly cooled. At this time, the atmosphere during the solution heat treatment and during the rapid cooling is preferably a vacuum or nitrogen atmosphere because oxidation of the Ni-based alloy built part can be prevented.

The aging heat treatment is also performed after the solution heat treatment in order to precipitate fine gamma-prime precipitates of Ni₃Al or Ni₃Ta called γ'. As described above, the high-temperature strength can be improved by intragranularly precipitating the gamma-prime precipitate by the aging heat treatment. When the aging heat treatment temperature is low and the time is too short, the aging heat treatment is insufficient and the high-temperature strength is not improved, and when the aging heat treatment temperature is high and the time is too long, overaging occurs and the size of the gamma-prime precipitate is coarsened and the high-temperature strength is lowered, so that the heat treatment temperature in the aging heat treatment is preferably 840°C or more and 1100°C or less, and the heat treatment time is preferably 5 hours or more and 30 hours or less. Summarizing the aging heat treatment in the present embodiment, it can be said that the aging heat treatment is a step in which the Ni-based alloy built part after the solution heat treatment is held for a heat treatment time of 5 hours or more and 30 hours or less in a furnace set at a heat treatment temperature of 840°C or higher and 1100°C or lower, and then taken out from the furnace and cooled. At this time, the atmosphere during the solution heat treatment and during the rapid cooling is preferably a vacuum or nitrogen atmosphere because oxidation of the Ni-based alloy built part can be prevented.

### [Ni-based alloy built part]

A Ni-based alloy built part obtained by the above-described method for manufacturing a Ni-based alloy built part contains at least, as additive elements, in mass%: Cr: 6% or more and 12% or less, Mo: 1% or more and 4% or less, Al: 4% or more and 8% or less, Co: 6% or more and 11% or less, W: 7% or more and 12% or less, Ta: 1% or more and 5% or less, Fe: 1.5% or more and 7% or less, C: 0.1% or more and 0.25% or less; and the remainder being Ni and unavoidable impurities. The Ni-based alloy powder for additive manufacturing preferably contains one or more of B: more than 0% and 0.1% or less, Nb: more than 0% and 0.5% or less, Hf: more than 0% and 0.5% or less, Ti: more than 0% and 0.5% or less, and Zr: more than 0% and 0.2% or less.

Note that the chemical components and the content of the Ni-based alloy built part are the same as those of the Ni-based alloy powder, and thus the description thereof will be omitted.

### <Structure of Ni-based alloy built part after additive manufacturing>

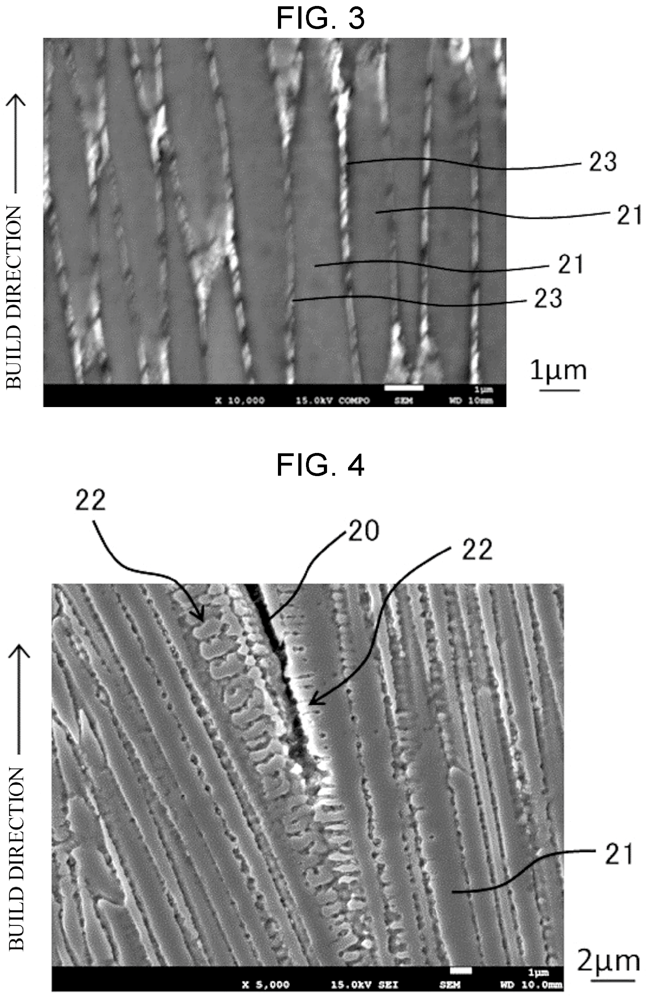

The Ni-based alloy built part of the present embodiment has a dendrite structure as shown in FIG. 3. At this time, the boundary width between primary dendrite structures 21 is preferably 0.4 µm or less. As described above, in a built part manufactured by an additive manufacturing method using a conventional Ni-based alloy powder, solidification segregation occurs at a crystal grain boundary portion during rapid cooling and solidification in an additive manufacturing process, so that tensile stress occurs and cracking occurs. In particular, cracking remarkably occurs in a Ni-based alloy built part having an alloy composition formed by the gamma-prime precipitate. In the Ni-based alloy built part of the present embodiment, the width of the boundary 23 between the primary dendrite structures 21 can be narrowed and cracking can be prevented by appropriately selecting the composition of the Ni-based alloy powder as a raw material as described above. More preferably, it does not have a secondary dendrite structure. Thus, segregation at the grain boundary (boundary 23) is reduced, and cracking of the built part can be prevented.

### <Structure of Ni-based alloy built part after heat treatment>

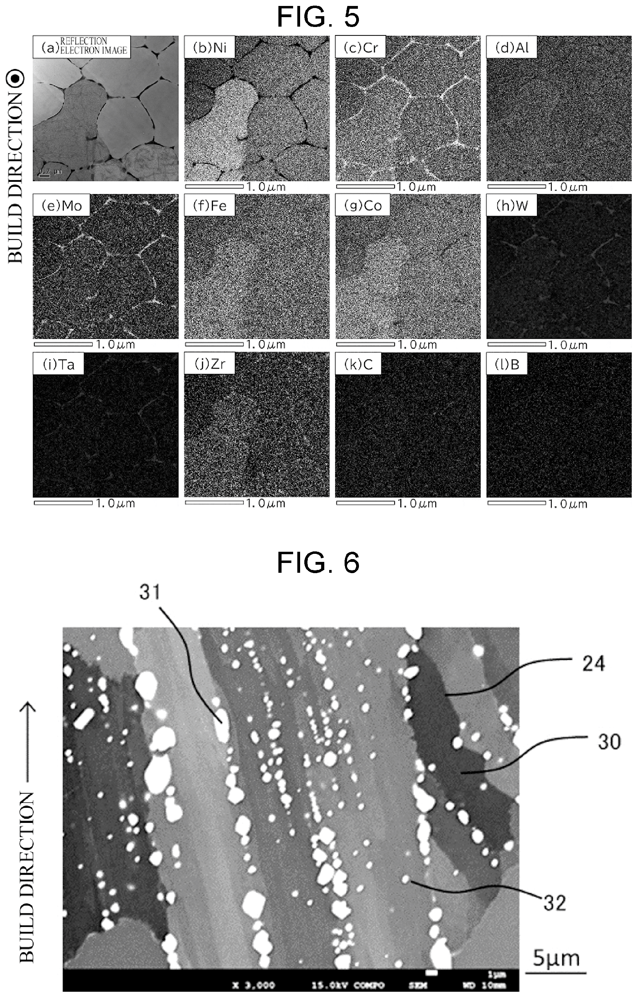

The Ni-based alloy built part of the present embodiment may be subjected to the above-described heat treatment step including a solution heat treatment and an aging heat treatment. In the structure of the Ni-based alloy built part subjected to the solution heat treatment in the heat treatment step, as shown in FIG. 6, the primary dendrite structure 21 disappears and the structure of crystal grains 30 and a carbide 32 is obtained. At this time, it is preferable that carbides are formed inside the crystal grains 30 and at the grain boundaries of the crystal grains 30. A carbide 31 formed inside the crystal grains 30 prevents the movement of the dislocation to improve high-temperature strength (precipitation strengthening). Since the carbide 32 formed at a crystal grain boundary 24 suppresses grain boundary sliding, high-temperature creep characteristics are improved. The ratio at which the carbide is formed is preferably 5% or more because a decrease in the ratio of the carbide causes a decrease in high-temperature strength and high-temperature creep characteristics, and is preferably 12% or less because a too large ratio of the carbide causes embrittlement. The ratio is more preferably 7% or more and 10% or less and still more preferably 8% or more and 9% or less. The formation ratio of such a carbide can be measured by calculating the area ratio in a cross-sectional structure image. In the structure of the Ni-based alloy built part subjected to the aging heat treatment after the solution heat treatment, a gamma-prime precipitate is formed in the crystal grains 30. The gamma-prime precipitate is an intermetallic compound composed of Ni and Al or Ta, and is represented by Ni₃Al or Ni₃Ta. When Ti as an optional additive element is contained in the Ni-based alloy built part, Ni₃Ti may be formed as the gamma-prime precipitate. The formation of such a gamma-prime precipitate improves the high-temperature mechanical properties and creep characteristics.

### <High-temperature strength and creep characteristics of Ni-based alloy built part>

It is known that a Ni-based alloy in which a gamma-prime precipitate is formed by a heat treatment has favorable high-temperature mechanical properties and creep characteristics, and has been manufactured by casting, forging, and rolling. However, when an alloy having such a composition is manufactured by an additive manufacturing method, there is a problem in that cracking occurs due to rapid cooling and solidification. Additive manufacturing using the powder of the composition of the present invention makes it possible to obtain a built part having favorable high-temperature mechanical properties and creep characteristics without occurrence of cracking even in a Ni-based alloy composition in which gamma-prime precipitates are formed after the heat treatment. The Ni-based alloy built part of the present embodiment can obtain excellent high-temperature mechanical properties and creep characteristics due to a plurality of factors such as intragranular precipitation strengthening by gamma-prime precipitates such as Ni₃Al and Ni₃Ta, intragranular solid solution strengthening by Mo, Co, and W, grain boundary strengthening by B and Zr, grain boundary strengthening by the carbide 31, and intragranular precipitation strengthening by the carbide 32.

### EXAMPLES

### <Composition of Ni-based alloy powder and evaluation of cracking of built part>

First, the compositions of metal powders used for building are shown in Table 1. From these compositions, Examples 1 to 6 and Comparative Examples 1 to 3 are obtained. Next, using metal powders of seven kinds of compositions having an average particle size (D50) of 25 µm prepared by a gas atomization method, a cuboidal built part (sample) of 10 mm × 10 mm × 10 mm was prepared by a laser powder bed fusion method (LPBF) under the conditions of a laser diameter of 75 µm, a lamination thickness per metal powder layer of 30 µm, a scan interval fixed to 0.05 mm, a laser output of 160 to 200 W, and a scan speed of 800 to 1400 mm/s. For each built part, a cross section was mirror-polished and evaluated with a microscope in order to confirm whether or not the built part was cracked. In Table 1, samples that were built under all the building conditions, that is, a total of 12 conditions including three conditions of laser outputs of 160, 180, and 200 W and four conditions of scan speeds of 800, 1000, 1200, and 1400 mm/s and were not cracked in all the built parts were described as no crack on the right side of the table, and samples that were cracked in any one of the conditions were described as cracked on the right side of the table. As a result of cross-section observation, cracking occurred in the built parts of Comparative Examples 1 to 3, and cracking did not occur in the built parts of Examples 1 to 6. In any of the compositions, the addition amount of C was set to 0.1 mass% or more in order to suppress cracking, but it is considered that cracking did not occur because the addition amount of Fe was as large as 2 mass% or more in Examples 1 to 6. On the other hand, it is considered that cracking occurred in Comparative Examples 1 to 3 because Ti was added in an amount of more than 0.5 mass% in Comparative Examples 1 and 2 and the addition amount of Fe was less than 1.0 mass%, which was insufficient, although Ti was not added in Comparative Example 3. From this, it was confirmed that the addition amount of C of 0.1 mass% or more, the addition amount of Ti of 0.5 mass% or less, and addition of Fe in an amount of at least 1.5 mass% or more were effective for prevention of cracking. In all of Examples 1 to 6, B is added in the same amount as in Comparative Examples, but none of them is cracked, so that it is considered that the addition of B is less likely to be involved in cracking and is less likely to promote the occurrence of cracking.

**[TABLE 1]**

| Sample name | Ni | Cr | Mo | Fe | C | Al | Zr | B | Co | W | Ta | Ti | Cracking |
|---|---|---|---|---|---|---|---|---|---|---|---|---|---|
| Example 1 | Bal | 8.97 | 2.41 | 4.96 | 0.187 | 6.44 | 0.06 | 0.013 | 10.00 | 9.19 | 1.50 | - | Absent |
| Example 2 | Bal | 8.91 | 2.37 | 2.94 | 0.192 | 6.46 | 0.07 | 0.018 | 9.86 | 9.07 | 1.46 | - | Absent |
| Example 3 | Bal | 8.93 | 2.41 | 4.95 | 0.164 | 6.61 | 0.06 | 0.014 | 9.91 | 9.15 | 1.52 | - | Absent |
| Example 4 | Bal | 8.95 | 2.41 | 4.98 | 0.139 | 6.44 | 0.06 | 0.014 | 9.90 | 9.14 | 1.48 | - | Absent |
| Example 5 | Bal | 8.98 | 2.44 | 3.99 | 0.181 | 6.56 | 0.07 | 0.017 | 10.00 | 9.03 | 1.52 | - | Absent |
| Example 6 | Bal | 8.93 | 2.37 | 2.95 | 0.194 | 6.31 | - | 0.018 | 9.90 | 9.34 | 1.50 | - | Absent |
| Comparative Example 1 | Bal | 8.31 | 2.45 | - | 0.191 | 5.39 | - | 0.02 | 9.1 | 9.31 | 1.35 | 1.35 | Present |
| Comparative Example 2 | Bal | 8.32 | 2.46 | - | 0.186 | 5.25 | - | 0.015 | 9.2 | 9.24 | 1.39 | 0.59 | Present |
| Comparative Example 3 | Bal | 8.93 | 2.41 | 0.98 | 0.173 | 6.48 | 0.07 | 0.017 | 9.98 | 9.31 | 1.47 | - | Present |

| | | | | | | | | | | | | | |
|---|---|---|---|---|---|---|---|---|---|---|---|---|---|
| In the table, "-" indicates no content. | | | | | | | | | | | | | |

### <Observation of structure of Ni-based alloy built part>

FIG. 3 shows a photograph of a structure of Example 2 taken by a scanning electron microscope (SEM) in a cross section perpendicular to the build direction at a magnification of 10000. Similarly to the above-described confirmation with the microscope, no cracking is observed in the built part of Example 2. In FIG. 3, the primary dendrite structure 21 grows in the build direction and has an elongated shape in the build direction with a width of about 0.5 to 2 µm. At the boundary 23 between the primary dendrite structures 21, the formation of the secondary dendrite structure 22 shown in FIG. 4 described later is not observed, and the width of the boundary 23 is 0.1 to 0.4 µm and is very narrow. Therefore, it is considered that no cracking occurred. Therefore, the width of the boundary 23 is preferably 0.4 µm or less. It was confirmed that the secondary dendrite structure 22 was not generated and the width of the boundary 23 was narrow in any of Examples 1 to 6 in which cracking did not occur. Therefore, it has been found that by appropriately selecting the composition of the Ni-based alloy powder as a raw material, the width of the boundary 23 between the primary dendrite structures 21 can be controlled to be narrow, and cracking can be prevented.

FIG. 4 shows a photograph of a structure of Comparative Example 1 taken by SEM in a cross section perpendicular to the build direction at a magnification of 5000. In Comparative Example 1, as also visually confirmed, the cracking 20 occurred so as to traverse the center of the image in FIG. 4. This indicates that the cracking 20 is also formed in the build direction. Also in Comparative Example 1, similarly to Example 2, it was confirmed that the primary dendrite structure 21 having a width of 0.5 to 2 µm was grown in the build direction, but since the secondary dendrite structure 22 was formed at the boundary 23 between the primary dendrite structures 21 around the cracking 20, the width of the boundary 23 was about 0.5 to 2 µm, which was wider than that in Example 2 described above. The formation of such a secondary dendrite structure 22 is considered to be a cause of cracking.

In order to examine the distribution of elements in Example 2, a cross section was observed with a scanning transmission electron microscope (STEM). FIG. 5 shows a cross-sectional photograph of Example 2 taken by STEM at a magnification of 25000. FIG. 5(a) shows a reflection electron image, and FIGS. 5(b) to 5(l) show mapping images of elements Ni, Cr, Al, Mo, Fe, Co, W, Ta, Zr, C, and B contained in Example 2, respectively. From FIG. 5(a), a polygonal primary dendrite structure 21 was observed since a cross section of a plane perpendicular to the build direction was observed. In FIGS. 5(c), 5(e), 5(h), 5(i), and 5(j) showing the distribution of Cr, Mo, W, Ta, and Zr, the boundary 23 is closer to white than the primary dendrite structure 21. From this, it was found that Cr, Mo, W, Ta, and Zr were segregated at the boundary 23 between the primary dendrite structures 21. Since this segregation deteriorates mechanical properties, it is necessary to perform a heat treatment in order to eliminate segregation.

### <Structure of heat-treated Ni-based alloy built part>

A heat treatment step including a solution heat treatment and an aging heat treatment was performed using Examples 1, 2 and 3. Note that, as described above, the solution heat treatment is performed to make the composition uniform, and the boundary 23 of the primary dendrite structure solidified and segregated disappears. The aging heat treatment is performed to precipitate fine gamma-prime precipitates of Ni₃Al or Ni₃Ta. In the solution heat treatment, the Ni-based alloy built part was held at a temperature of 1220°C for 10 hours in vacuum, and rapidly cooled in a high-pressure nitrogen atmosphere of 0.5 MPa. Thereafter, in the aging heat treatment, the Ni-based alloy built part was heated to 870°C in vacuum, held for 16 hours, and rapidly cooled in a high-pressure nitrogen atmosphere of 0.5 MPa. The high-temperature strength and creep characteristics can be improved by the solution heat treatment and the aging heat treatment.

FIG. 6 shows a cross-sectional photograph of Example 2 subjected to the above-described heat treatment step taken by SEM at a magnification of 3000. The crystal grains 30 have a structure grown in the build direction, and two kinds of the carbide 31 precipitated at the grain boundaries of the crystal grains 30 (hereinafter, simply referred to as the carbide 31) and the carbide 32 precipitated in the crystal grains 30 (hereinafter, simply referred to as the carbide 32) are generated by the heat treatment. The composite carbide containing W or Mo was analyzed by energy dispersive X-ray analysis using a scanning electron microscope, and the carbide 31 and the carbide 32 had the same composition. When the cross-sectional photograph was binarized to determine the ratio of the regions of the carbides 31 and 32 to the area in the image, the ratio was 8.8%. Similarly, the ratio of the carbide 31 and the carbide 32 was 8.7% in Example 1, 7.6% in Example 3, and 6.2% in Example 4. In all Examples, the carbide ratio was within a range of 5 to 12%.

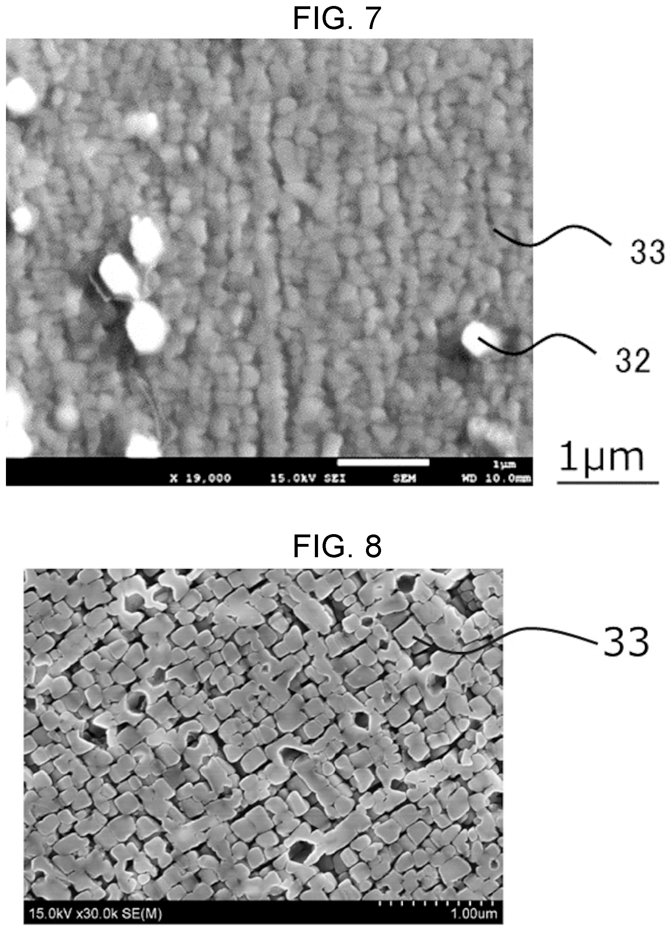

FIG. 7 shows a photograph at a magnification of 19000 by SEM of a gamma-prime precipitate in the built part of Example 1 subjected to the heat treatment step. In FIG. 7, it was confirmed that a granular gamma-prime precipitate 33 having a size of about 0.1 µm was generated in the carbide 31 and the crystal grains. FIG. 8 shows a cross-sectional photograph of Example 3 subjected to the heat treatment step taken by SEM at a magnification of 30000. In cross-section observation, phosphoric acid electrolytic etching was performed in Example 3. Although no carbide 31 was observed due to the phosphoric acid electrolytic etching, it was confirmed that a cuboidal gamma-prime precipitate 33 having a size of 0.1 to 0.2 µm was generated. As a result of analysis by energy dispersive X-ray analysis using a scanning electron microscope, the gamma-prime precipitate 33 is a precipitate containing Ni, Ta, and Al, and is considered to be Ni₃Al or Ni₃Ta. This precipitate precipitates when subjected to an aging heat treatment, and is hard and ductile, and thus is effective for improving high-temperature strength and improving creep characteristics.

### <Mechanical properties of heat-treated Ni-based alloy built part>

A high-temperature tensile test and a creep test were performed on Examples 1 to 4 subjected to the heat treatment step described above. The high-temperature tensile test and the creep test were performed in accordance with ASTM-E8/E8M and ASTM-E139, respectively. Table 2 shows the results of the high-temperature tensile test. In all Examples, satisfactory tensile strength was obtained to be 1300 MPa or more at a test temperature of room temperature, 1000 MPa or more at a test temperature of 700°C, 900 MPa or more at a test temperature of 800°C, 600 MPa or more at a test temperature of 900°C, and 300 MPa or more at a test temperature of 1000°C. The elongation at room temperature was 15% or more, the elongation at a test temperature of 700°C or higher was 20% or more, and the reduction of area was 20% or more, which were favorable. The results of evaluating the creep characteristics in Example 1 are shown in Table 3. A creep test was performed under the conditions of a test temperature of 800°C and a creep load of 350 MPa, and it was confirmed that a favorable breaking time of 1380 hours can be obtained. The breaking time was 302 hours at a test temperature of 900°C and a creep load of 200 MPa, and the breaking time was 268 hours at a test temperature of 980°C and a creep load of 100 MPa, which were all favorable breaking times.

**[TABLE 2]**

| | Temperature (°C) | Tensile strength (MPa) | Yield strength (MPa) | Elongation (%) | Reduction of area (%) |
|---|---|---|---|---|---|
| Example 1 | 700 | 1165 | 830 | 23 | 26 |
| | 800 | 962 | 768 | 25 | 41 |
| | 900 | 648 | 517 | 31 | 49 |
| | 1000 | 355 | 269 | 31 | 40 |
| Example 2 | 700 | 1140 | 818 | 25 | 27 |
| | 800 | 1005 | 789 | 20 | 26 |
| | 900 | 707 | 547 | 31 | 39 |
| | 1000 | 412 | 309 | 28 | 39 |
| Example3 | 700 | 1140 | 810 | 25 | 33 |
| | 800 | 958 | 745 | 29 | 41 |
| | 900 | 653 | 487 | 32 | 42 |
| | 1000 | 359 | 271 | 34 | 47 |
| Example4 | 700 | 1040 | 811 | 24 | 25 |
| | 800 | 961 | 711 | 24 | 30 |
| | 900 | 658 | 493 | 23 | 30 |
| | 1000 | 373 | 294 | 23 | 27 |

**[TABLE 3]**

| | Test temperaturc(°C) | Stress(MPa) | Breaking time (hr) |
|---|---|---|---|
| | 980 | 100 | 268 |
| Example 1 | 900 | 200 | 302 |
| | 800 | 450 | 1380 |

### REFERENCE SIGNS LIST

- 1: Powder
- 2: Powder supply stage
- 3: Recoater
- 4: Laser oscillator
- 5: Laser light
- 6: Galvano scanner
- 7: Irradiation region
- 8: Building stage
- 9: Powder supply container
- 10: Building box
- 11: Powder recovery box
- 20: Cracking
- 21: Primary dendrite structure
- 22: Secondary dendrite structure
- 23: Boundary of primary dendrite structure
- 24: Crystal grain boundary
- 30: Crystal grain
- 31: Carbide precipitated at grain boundary
- 32: Carbide precipitated in grains
- 33: Gamma-prime precipitate

## Claims

1. A Ni-based alloy powder for additive manufacturing, comprising at least, as additive elements, in mass%:
Cr: 6% or more and 12% or less;
Mo: 1% or more and 4% or less;
Al: 4% or more and 8% or less;
Co: 6% or more and 11% or less;
W: 7% or more and 12% or less;
Ta: 1% or more and 5% or less;
Fe: 1.5% or more and 7% or less;
C: 0.1% or more and 0.25% or less; and
the remainder being Ni and unavoidable impurities.

2. The Ni-based alloy powder for additive manufacturing according to claim 1, comprising,
as the additive element, in mass%,
B: more than 0% and 0.1% or less.

3. The Ni-based alloy powder for additive manufacturing according to claim 1, comprising
at least one of, as the additive element, in mass%:
Nb: more than 0% and 0.5% or less; and
Hf: more than 0% and 0.5% or less.

4. The Ni-based alloy powder for additive manufacturing according to claim 1, comprising
at least one of, as the additive element, in mass%:
Ti: more than 0% and 0.5% or less; and
Zr: more than 0% and 0.2% or less.

5. The Ni-based alloy powder for additive manufacturing according to claim 2, wherein
the B is 0.005% or more and 0.05% or less in mass%.

6. The Ni-based alloy powder for additive manufacturing according to claim 1, comprising,
in mass%, Zr: 0.02% or more and 0.15% or less.

7. A method for manufacturing a Ni-based alloy built part, the method comprising: performing a powder-fusion additive manufacturing method to obtain a Ni-based alloy built part, the powder-fusion additive manufacturing method including:
supplying a Ni-based alloy powder for additive manufacturing, containing at least, as additive elements, in mass%:
Cr: 6% or more and 12% or less;
Mo: 1% or more and 4% or less;
Al: 4% or more and 8% or less;
Co: 6% or more and 11% or less;
W: 7% or more and 12% or less;
Ta: 1% or more and 5% or less;
Fe: 1.5% or more and 7% or less;
C: 0.1% or more and 0.25% or less; and
the remainder being Ni and unavoidable impurities;
selectively irradiating the supplied Ni-based alloy powder for additive manufacturing with laser light to melt and solidify the Ni-based alloy powder for additive manufacturing, and repeating a step of supplying, and melting and solidifying the Ni-based alloy powder for additive manufacturing.

8. The method for manufacturing a Ni-based alloy built part according to claim 7, wherein
the Ni-based alloy powder for additive manufacturing contains, as the additive element, in mass%,
B: more than 0% and 0.1% or less.

9. The method for manufacturing a Ni-based alloy built part according to claim 7, wherein
the Ni-based alloy powder for additive manufacturing contains at least one of, as the additive element, in mass%:
Nb: more than 0% and 0.5% or less; and
Hf: more than 0% and 0.5% or less.

10. The method for manufacturing a Ni-based alloy built part according to claim 7, wherein
the Ni-based alloy powder for additive manufacturing contains at least one of, as the additive element, in mass%:
Ti: more than 0% and 0.5% or less; and
Zr: more than 0% and 0.2% or less.

11. The method for manufacturing a Ni-based alloy built part according to claim 7, wherein a boundary width of a primary dendrite structure in a cross-sectional structure of the Ni-based alloy built part is 0.4 µm or less.

12. The method for manufacturing a Ni-based alloy built part according to claim 7, comprising a heat treatment step of subjecting the Ni-based alloy built part obtained by the powder-fusion additive manufacturing method to a heat treatment.

13. The method for manufacturing a Ni-based alloy built part according to claim 12, wherein the heat treatment step includes a solution heat treatment and an aging heat treatment.

14. The method for manufacturing a Ni-based alloy built part according to claim 7, wherein an area ratio occupied by a carbide in a cross-sectional structure of the Ni-based alloy built part is 5% or more and 12% or less.
